# EUROPEAN PATENT APPLICATION

(11) **EP 4 782 163 A2**
(43) Date of publication of application: **29.07.2026**
(21) Application number: 26179739.3
(22) Date of filing: 19.05.2026
(51) Int. Cl.: B25J 17/00, B62D 57/032

(54) **JOINT STRUCTURE, ROBOTIC ARM, AND ROBOTIC LEG**

(30) Priority: 07.11.2025 CN 202522363768 U
(71) Applicant: Shanghai TARS Robotics Co., Ltd., Shanghai 200233 (CN)
(72) Inventor: WANG, Tianyi, Shanghai 200233 (CN); ZHU, Xing, Shanghai 200233 (CN)
(74) Representative: JD&P Patent Attorneys Joanna Dargiewicz & Partners

(57) **Abstract**

A joint structure is configured to connect a proximal limb and a distal limb. The joint structure includes a first motor, an adapter bracket, and a second motor. The first motor is configured to be arranged inside the proximal limb. The adapter bracket includes a connection portion and a support portion. An upper end of the connection portion is connected to an output shaft of the first motor. A lower end of the connection portion is connected to the support portion. The support portion is located below the proximal limb. The second motor is arranged inside the support portion and an output shaft of the second motor extends out of the support portion and is connected to the distal limb. An axis of the first motor is perpendicular to an axis of the second motor, such that proximal housings of the proximal limb remain continuous and intact.

## Description

### CROSS-REFERENCE TO RELATED APPLICATIONS

This application claims priority to Chinese Patent Application No. 202522363768.1 with a filing date of Nov. 07, 2025. The content of the aforementioned application, including any intervening amendments thereto, is incorporated herein by reference.

### TECHNICAL FIELD

The present disclosure relates to the technical field of robots, and in particular to a joint structure, a robotic arm, and a robotic leg.

### BACKGROUND

In the prior art, one robotic limb design involves dividing a complete limb into a plurality of segments that are each driven by a motor arranged inside the corresponding segment. For example, the Chinese Patent CN207014400U discloses a robotic arm in which an upper arm includes a proximal section and a distal section and a motor driving a rotation of the distal section is arranged inside the proximal section.

Consequently, a housing of the upper arm needs to be designed as a discontinuous split structure to accommodate the motor and allow the rotation of the distal section. Such a design compromises the continuity between a proximal section housing and a distal section housing. The discontinuous housing makes it difficult to achieve a tidy and comprehensive layout of fully covering sensors (such as tactile sensors) across the surface.

### SUMMARY OF PRESENT INVENTION

An objective of the present disclosure is to provide a joint structure, a robotic arm, and a robotic leg in view of the shortcomings in the prior art.

To achieve the above objective, the present disclosure provides the following technical solutions:
A joint structure configured to connect a proximal limb and a distal limb is provided, including:
a first motor, where the first motor is configured to be arranged inside the proximal limb;
an adapter bracket, where the adapter bracket includes a connection portion and a support portion, an upper end of the connection portion is connected to an output shaft of the first motor, a lower end of the connection portion is connected to the support portion, and the support portion is located below the proximal limb;
a second motor, where the second motor is arranged inside the support portion and an output shaft of the second motor extends out of the support portion and is connected to the distal limb,
where an axis of the first motor is perpendicular to an axis of the second motor.

As a preferred embodiment, the connection portion comprises a first connection shell and a second connection shell that are snap fitted to each other; and the support portion comprises a first support shell and a second support shell that are snap fitted to each other.

As a preferred embodiment, the first connection shell and the first support shell are integrally formed; the second connection shell and the second support shell are integrally formed.

As a preferred embodiment, the proximal limb includes:
a proximal frame, where the first motor is fixed to the proximal frame; and
two proximal housings, where the two proximal housings are correspondingly fastened to the proximal frame.

As a preferred embodiment, the proximal frame includes:
a proximal enclosure plate, where the proximal enclosure plate surrounds an exterior of the first motor, and the two proximal housings are fixed to an outer wall of the proximal enclosure plate.

As a preferred embodiment, the proximal frame includes:
two proximal side rods;
a proximal enclosure plate, where the proximal enclosure plate is connected between the two proximal side rods; and
a clamping hoop, where the clamping hoop and the proximal enclosure plate jointly clamp and secure the first motor.

As a preferred embodiment, an inner wall of the proximal enclosure plate and/or the clamping hoop is provided with a limiting protrusion, an outer wall of the first motor is correspondingly provided with a limiting recess, and the limiting protrusion engages with the limiting recess.

As a preferred embodiment, the distal limb includes:
a distal connection plate, where the distal connection plate is connected to the output shaft of the second motor;
a distal frame, where the distal frame is connected to the distal connection plate and located below the distal connection plate; and
two distal housings, where the two distal housings are fastened to two sides of the distal frame, respectively.

A robotic arm is provided, including the joint structure described in the above embodiments, a proximal limb, and a distal limb.

A robotic leg is provided, including the joint structure described in the above embodiments, a proximal limb, and a distal limb.

Compared with the prior art, the technical solutions of the present disclosure offer the following advantages:
By configuring the joint structure as a functional module independent of the proximal limb, the proximal housings of the proximal limb remain continuous and intact. This continuity provides an arrangement base for full coverage by tactile sensors across the outer surface and enables forms of the proximal housings to support a non-circular cross-sectional design.

### BRIEF DESCRIPTION OF THE DRAWINGS

FIG. 1 is a schematic structural diagram showing a robotic leg according to an embodiment of the present disclosure;
FIG. 2 is a cross-sectional view showing the robotic leg according to an embodiment of the present disclosure;
FIG. 3 is a schematic enlarged view of portion A shown in FIG. 2;
FIG. 4 is a schematic structural diagram showing an adapter bracket according to an embodiment of the present disclosure;
FIG. 5 is a schematic structural diagram showing a proximal frame in the robotic leg according to an embodiment of the present disclosure;
FIG. 6 is a schematic structural diagram showing a robotic arm according to an embodiment of the present disclosure; and
FIG. 7 is a schematic structural diagram showing the proximal frame in the robotic arm according to an embodiment of the present disclosure.

Reference numerals: 100-joint structure, 110-first motor, 111-limiting recess, 110a-output shaft of the first motor, 120-adapter bracket, 121-connection portion, 122-support portion, 123-first adapter housing, 123a-first connection shell, 123b-first support shell, 124-second adapter housing, 124a-second connection shell, 124b-second support shell, 130-second motor,130a-output shaft of the second motor, 200-proximal limb, 210-proximal frame, 211-proximal side rod, 212-proximal enclosure plate, 213-clamping hoop, 214-limiting protrusion, 220-proximal housing, 300-distal limb, 310-distal frame, 320-distal housing, and 330-distal connection plate.

### DETAILED DESCRIPTION OF THE EMBODIMENTS

The following description is provided to disclose the present disclosure such that those skilled in the art can implement the present disclosure. The following preferred embodiments are merely provided as examples, and those skilled in the art may conceive of other obvious variations. The basic principles of the present disclosure defined in the following description may be applied to other embodiments, variations, improvements, equivalents, and other technical solutions that do not depart from the spirit and scope of the present disclosure.

### Embodiment 1

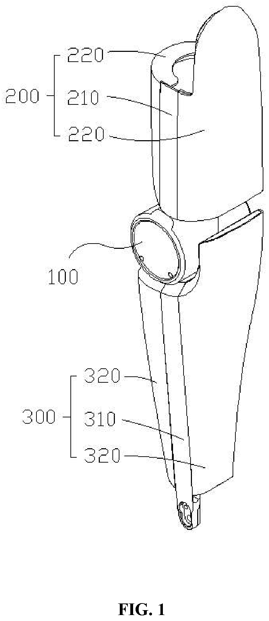

As shown in FIG. 1, FIG. 2, and FIG. 6, this embodiment of the present disclosure provides a joint structure 100 configured to connect a proximal limb 200 and a distal limb 300. The joint structure 100 includes a first motor 110, an adapter bracket 120, and a second motor 130.

The first motor 110 is configured to be arranged inside the proximal limb 200.

The adapter bracket 120 includes a connection portion 121 and a support portion 122. An upper end of the connection portion 121 is connected to an output shaft 110a of the first motor 110. A lower end of the connection portion 121 is connected to the support portion 122. The support portion 122 is located below the proximal limb 200.

The second motor 130 is arranged inside the support portion 122. An output shaft 130a of the second motor 130 extends out of the support portion 122 and is connected to the distal limb 300.

An axis of the first motor 110 is perpendicular to an axis of the second motor 130.

The joint structure 100 is arranged at a joint between the proximal limb 200 and the distal limb 300. When the first motor 110 operates, the adapter bracket 120 and the distal limb 300 are driven to rotate jointly about the axis of the first motor 110. When the second motor 130 operates, the distal limb 300 is driven to rotate about the axis of the second motor. A coordinated operation of the first and second motors enables movements of the joint.

In this embodiment, the joint structure 100 is configured as a functional module independent of the proximal limb 200, such that proximal housings 220 of the proximal limb 200 remain continuous and intact. This continuity provides an arrangement base for full coverage by tactile sensors across the outer surface and enables the forms of the proximal housings to support a non-circular cross-sectional design. For example, cross-sections of the proximal housings 220 can be designed to smoothly transition from a square shape at an upper end to a circular shape at a lower end.

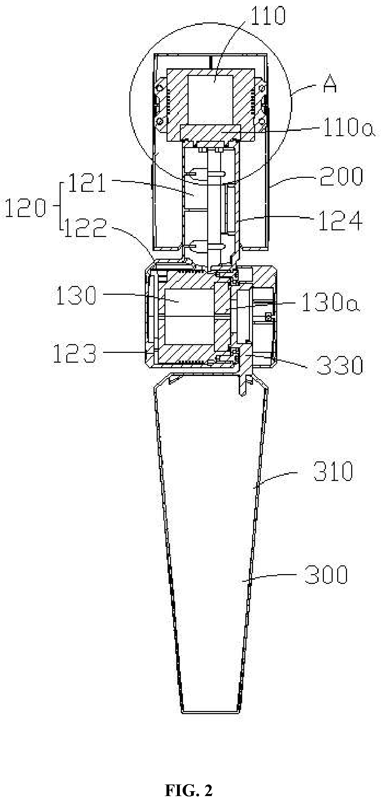

As shown in FIG. 2, the adapter bracket 120 includes a connection portion 121 and a support portion 122. Both the connection portion 121 and the support portion 122 are cylindrical, and axes of the connection portion and the support portion are perpendicular to each other. An upper end of the connection portion 121 is connected to the output shaft 110a of the first motor 110 and is coaxially arranged with the first motor 110. A lower end of the connection portion is connected to the support portion 122. The second motor 130 is arranged inside the support portion 122 and is coaxially arranged with the support portion 122. In this way, the axis of the first motor 110 is perpendicular to the axis of the second motor 130.

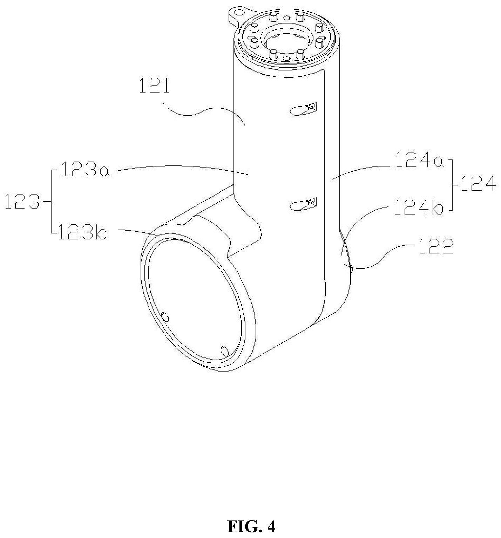

As shown in FIG. 2 and FIG. 4, the connection portion 121 comprises a first connection shell 123a and a second connection shell 124a that are snap fitted to each other; and the support portion 122 comprises a first support shell 123b and a second support shell 124b that are snap fitted to each other.

Specifically, the first connection shell 123a and the first support shell 123b are integrally formed. Correspondingly, the second connection shell 124a and the second support shell 124b are integrally formed..

During assembly, the second motor 130 can be first fixed inside the second support shell 124b through bolts, and the first adapter housing 123 is then aligned with and fastened to the second adapter housing 124. In this way, the second motor 130 is encapsulated within the support portion 122 formed by the first support shell 123b and the second support shell 124b.

Further, the fastening of the first adapter housing 123 to the second adapter housing 124 facilitates the connection of the adapter bracket 120 with the first motor 110. An assembly route is as follows: The second motor 130 can be first fixed inside the second support shell 124b, the second connection shell 124a is then connected to the output shaft 110a of the first motor 110 through bolts, and finally, the first support shell 123b is fastened to the second support shell 124b.

As shown in FIG. 1 and FIG. 2, the proximal limb 200 includes a proximal frame 210 and two proximal housings 220.

The first motor 110 is fixed to the proximal frame 210.

The two proximal housings 220 are correspondingly fastened to the proximal frame 210.

After being assembled, the first motor 110 and the adapter bracket 120 can be arranged as an integrated unit on the proximal limb 200. The first motor 110 is fixed to the proximal frame 210, the first proximal housing 220 is then arranged on a side of the proximal frame 210, and the second proximal housing 220 is then arranged on another side of the proximal frame 210. The first and second proximal housings 220 are fastened together to produce a complete housing. As a result, the first motor 110 and the connection portion 121 are encapsulated within an internal space of the complete housing.

Seams between the two proximal housings 220 are necessary parting lines for manufacturing and assembly, rather than functional break points caused by structural requirements as described in the background. These seams do not compromise the continuity and integrity of surfaces of the proximal housings 220.

As shown in FIG. 1 and FIG. 2, the distal limb 300 includes a distal connection plate 330, a distal frame 310, and two distal housings 320.

The distal connection plate 330 is connected to the output shaft 130a of the second motor 130.

The distal frame 310 is connected to the distal connection plate 330 and located below the distal connection plate 330.

The two distal housings 320 are fastened to two sides of the distal frame 310, respectively.

The distal connection plate 330 is integrally connected to the distal frame 310. The distal connection plate 330 is fixed to the output shaft 130a of the second motor 130 through bolts. Thus, the second motor 130 can drive the distal limb 300 to rotate about the axis of the second motor 130.

### Embodiment 2

As shown in FIG. 1 and FIG. 2, this embodiment provides a robotic leg, including the joint structure 100 in Embodiment 1, a proximal limb 200, and a distal limb 300. If the proximal limb 200 corresponds to a thigh and the distal limb 300 corresponds to a lower leg, then the joint structure 100 functions as an elbow joint.

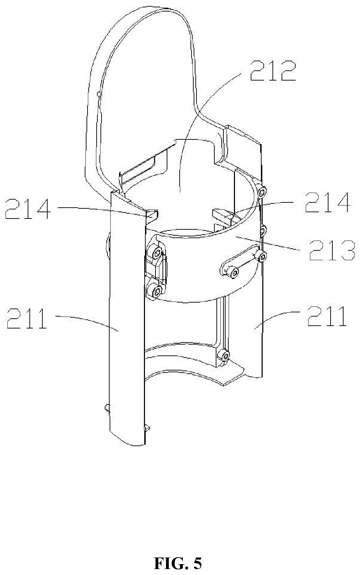

As shown in FIG. 5, the proximal frame 210 includes:
two proximal side rods 211, a proximal enclosure plate 212, and a clamping hoop 213.

The proximal enclosure plate 212 is connected between the two proximal side rods 211. The proximal enclosure plate 212 is integrally connected to the proximal side rods 211.

The clamping hoop 213 and the proximal enclosure plate 212 jointly clamp and secure the first motor 110.

During assembly, the first motor 110 is first arranged on the proximal enclosure plate 212 with a circumferential side of the first motor contacting and positioned against the proximal enclosure plate 212, the clamping hoop 213 is then allowed to cover another circumferential side of the first motor 110, and the clamping hoop 213 is connected to the proximal enclosure plate 212 through bolts. In this way, the clamping hoop 213 and the proximal enclosure plate 212 cooperatively clamp and secure the first motor 110. Subsequently, two proximal housings 220 are fixed to the proximal frame 210.

In this case, the proximal side rods 211 are sandwiched between the two proximal housings 220. The resulting seams are necessary parting lines for manufacturing and assembly, rather than functional break points caused by structural requirements as described in the background. These seams do not compromise the continuity and integrity of surfaces of the proximal housings 220.

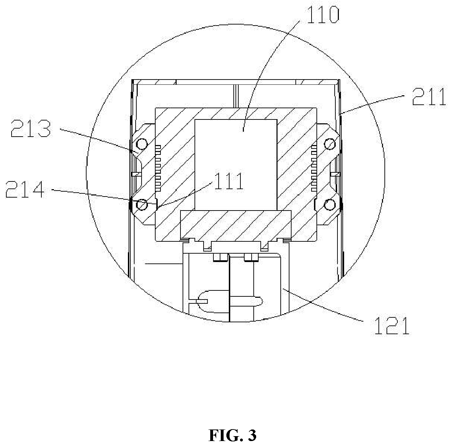

As shown in FIG. 3 and FIG. 5, an inner wall of the proximal enclosure plate 212 and/or the clamping hoop 213 is provided with a limiting protrusion 214, an outer wall of the first motor 110 is correspondingly provided with a limiting recess 111, and the limiting protrusion 214 engages with the limiting recess 111. The engagement between the limiting protrusion 214 and the limiting recess 111 enhances the stability of the fixation of the first motor 110.

### Embodiment 3

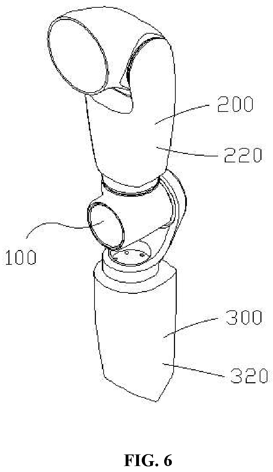

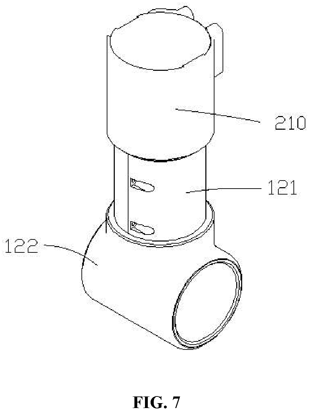

As shown in FIG. 6 and FIG. 7, this embodiment provides a robotic arm, including the joint structure 100 in the above embodiment, a proximal limb 200, and a distal limb 300. If the proximal limb 200 corresponds to an upper arm and the distal limb 300 corresponds to a forearm, then the joint structure 100 functions as an elbow joint.

As shown in FIG. 7, the proximal frame 210 includes a proximal enclosure plate 212.

The proximal enclosure plate 212 surrounds an exterior of the first motor 110. The two proximal housings 220 are fixed to an outer wall of the proximal enclosure plate 212.

During assembly, the first motor 110 is inserted into the proximal enclosure plate 212 and fixed through bolts, and then, the two proximal housings 220 are fixed to the outer wall of the proximal enclosure plate 212. Consequently, the two proximal housings 220 are joined together.

Seams resulting from the joining of the two proximal housings 220 are necessary parting lines for manufacturing and assembly, rather than functional break points caused by structural requirements as described in the background. These seams do not compromise the continuity and integrity of surfaces of the proximal housings 220.

The embodiments described above are merely intended to illustrate the technical concept and features of the present disclosure and to enable those skilled in the art to understand and implement the content of the present disclosure. The scope of the present disclosure shall not be limited solely by these embodiments. That is, all equivalent modifications or variations made based on the spirit disclosed by the present disclosure shall still fall within the scope of the present disclosure.

## Claims

1. A joint structure (100), configured to connect a proximal limb (200) and a distal limb (300), and comprising:
a first motor (110), wherein the first motor (110) is configured to be arranged inside the proximal limb (200);
an adapter bracket (120), wherein the adapter bracket (120) comprises a connection portion (121) and a support portion (122), an upper end of the connection portion (121) is connected to an output shaft (110a) of the first motor (110), a lower end of the connection portion (121) is connected to the support portion (122), and the support portion (122) is located below the proximal limb (200); and
a second motor (130), wherein the second motor (130) is arranged inside the support portion (122) and an output shaft (130a) of the second motor (130) extends out of the support portion (122) and is connected to the distal limb (300),
wherein an axis of the first motor (110) is perpendicular to an axis of the second motor (130).

2. The joint structure (100) according to claim 1, wherein the connection portion (121) comprises a first connection shell (123a) and a second connection shell (124a) that are snap fitted to each other; and the support portion (122) comprises a first support shell (123b) and a second support shell (124b) that are snap fitted to each other.

3. The joint structure (100) according to claim 2, wherein the first connection shell (123a) and the first support shell (123b) are integrally formed;
the second connection shell (124a) and the second support shell (124b) are integrally formed.

4. The joint structure (100) according to claim 1, wherein the proximal limb (200) comprises:
a proximal frame (210), wherein the first motor (110) is fixed to the proximal frame (210); and
two proximal housings (220), wherein the two proximal housings (220) are correspondingly fastened to the proximal frame (210).

5. The joint structure (100) according to claim 4, wherein the proximal frame (210) comprises:
a proximal enclosure plate (212), wherein the proximal enclosure plate (212) surrounds an exterior of the first motor (110), and the two proximal housings (220) are fixed to an outer wall of the proximal enclosure plate (212).

6. The joint structure (100) according to claim 4, wherein the proximal frame (210) comprises:
two proximal side rods (211);
a proximal enclosure plate (212), wherein the proximal enclosure plate (212) is connected between the two proximal side rods (211); and
a clamping hoop (213), wherein the clamping hoop (213) and the proximal enclosure plate (212) jointly clamp and secure the first motor (110).

7. The joint structure (100) according to claim 6, wherein an inner wall of the proximal enclosure plate (212) and/or the clamping hoop (213) is provided with a limiting protrusion (214), an outer wall of the first motor (110) is correspondingly provided with a limiting recess (111), and the limiting protrusion (214) engages with the limiting recess (111).

8. The joint structure (100) according to claim 1, wherein the distal limb (300) comprises:
a distal connection plate (330), wherein the distal connection plate (330) is connected to the output shaft (130a) of the second motor (130);
a distal frame (310), wherein the distal frame (310) is connected to the distal connection plate (330) and located below the distal connection plate (330); and
two distal housings (320), wherein the two distal housings (320) are fastened to two sides of the distal frame (310), respectively.

9. A robotic arm, comprising the joint structure (100) according to any one of claims 1 to 8, the proximal limb (200), and the distal limb (300).

10. A robotic leg, comprising the joint structure (100) according to any one of claims 1 to 8, the proximal limb (200), and the distal limb (300).
